(19) **Europäisches Patentamt**

**European Patent Office**

**Office européen des brevets**

(11) **EP 0 686 298 B1**

(12) **FASCICULE DE BREVET EUROPEEN**

(45) Date de publication et mention
de la délivrance du brevet:
**17.05.2000 Bulletin 2000/20**

(51) Int. Cl.$^7$: **G11B 7/00**, G11B 7/125,
G11B 7/24

(21) Numéro de dépôt: **95904592.3**

(22) Date de dépôt: **22.12.1994**

(86) Numéro de dépôt international:
**PCT/FR94/01517**

(87) Numéro de publication internationale:
**WO 95/17747 (29.06.1995 Gazette 1995/27)**

(54) **PROCEDE ET SYSTEME OPTIQUES D'INSCRIPTION/LECTURE D'INFORMATION SUR UN SUPPORT D'ENREGISTREMENT**

VERFAHREN UND OPTISCHES SYSTEM ZUR AUFZEICHNUNG/WIEDERGABE VON
INFORMATION AUF EINEM AUFZEICHNUNGSMEDIUM

OPTICAL METHOD AND SYSTEM FOR READING/WRITING DATA ON A RECORDING MEDIUM

(84) Etats contractants désignés:
**DE FR GB NL**

(30) Priorité: **23.12.1993 FR 9315550**
**13.07.1994 FR 9408736**

(43) Date de publication de la demande:
**13.12.1995 Bulletin 1995/50**

(73) Titulaire: **THOMSON-CSF**
**75008 Paris (FR)**

(72) Inventeurs:
• **LE CARVENNEC, François**
**F-92402 Courbevoie Cédex (FR)**
• **HUIGNARD, Jean-Pierre**
**F-92402 Courbevoie Cédex (FR)**
• **PUECH, Claude**
**F-92402 Courbevoie Cédex (FR)**
• **LOISEAUX, Brigitte**
**F-92402 Courbevoie Cédex (FR)**

(56) Documents cités:
**EP-A- 0 343 727        EP-A- 0 444 766**
**FR-A- 2 521 760**

• **PATENT ABSTRACTS OF JAPAN vol. 14 no. 303
(P-1070) [4246] ,29 Juin 1990 & JP,A,02 096937
(NIPPON COLUMBIA CO LTD) 9 Avril 1990,**
• **RESEARCH DISCLOSURE, vol. 328, HAVANT
GB, page 605 'Optical Disc with Increased
Information Density'**
• **PATENT ABSTRACTS OF JAPAN vol. 8 no. 113
(P-276) [1550] ,26 Mai 1984 & JP,A,59 022246
(TOKYO SHIBAURA DENKI KK) 4 Février 1984,**
• **PATENT ABSTRACTS OF JAPAN vol. 6 no. 255
(P-162) [1133] ,14 Décembre 1982 & JP,A,57
152549 (FUJITSU KK) 20 Septembre 1982,**
• **PATENT ABSTRACTS OF JAPAN vol. 15 no. 87
(P-1173) [4615] ,28 Février 1991 & JP,A,02
302932 (FUJI ELECTRIC CO LTD) 14 Décembre
1990,**

## Description

L'invention concerne un procédé et un système optique d'inscription/lecture d'informations sur un support d'enregistrement. Elle concerne aussi un support d'enregistrement.

Les principes de stockage optique qui sont aujourd'hui développés mettent en oeuvre des lasers semiconducteurs fonctionnant dans le proche IR ($\lambda \sim$ 0,8 μm) pour obtenir typiquement des densités de stockage de l'ordre de $10^8$ bits cm$^{-2}$. Ces ordres de grandeur correspondent à l'inscription de bits élémentaires de l'ordre de 0,8 μm de diamètre sur un disque à lecture seule, ou un support inscriptible et effaçable magnéto-optique. L'objet de l'invention est d'obtenir un gain significatif sur la capacité de stockage. On peut augmenter la capacité de stockage en augmentant la densité d'information par unité de surface du support d'enregistrement. On peut également augmenter cette capacité en enregistrant dans l'épaisseur du support d'enregistrement.

Le brevet FR-A-2 521 760 qui reflète le preambule de la revendication indépendante 1, et la demande de brevet JP-A-63 249 661 décrivent des procédés ou systèmes d'inscription thermo-optique sur un support d'information à l'aide de la superposition de deux faisceaux de longueurs d'ondes différentes mais ils ne prévoient pas, dans le même procédé, la lecture des informations inscrites.

La demande de brevet européen EP-A-0 343 727 et le document Research Disclosure, Vol. 328, 08/91, pages 605-606 décrivent des systèmes dans lesquels une inscription optique, sur un support d'enregistrement, se fait au-delà d'un seuil d'énergie d'enregistrement, la lecture pouvant être prévue avec un faisceau optique de lecture de longueur d'onde inférieure à celle de l'enregistrement. Cependant, de tels systèmes assurent difficilement d'avoir des dimensions (diamètre) des marques d'enregistrement parfaitement calibrées au diamètre d'un faisceau de lecture.

De plus, les faisceaux aux deux longueurs doivent être parfaitement centrés ce qui pose un problème de positionnement des faisceaux.

L'invention permet de résoudre ces problèmes.

Les principes et moyens de réalisation faisant l'objet de l'invention sont entièrement compatibles avec la structure optique des têtes de lecture des disques optiques et mémoires optiques digitales.

L'invention concerne donc un procédé optique d'inscription/lecture d'information sur un support d'enregistrement selon lequel l'inscription d'informations est réalisée à l'aide d'un faisceau d'inscription comportant la superposition d'au moins un premier faisceau optique à une première longueur d'onde ($\lambda_1$) et au moins un deuxième faisceau optique à une deuxième longueur d'onde ($\lambda_2$) inférieure à la première longueur d'onde, caractérisé en ce que la lecture étant réalisée à l'aide du deuxième faisceau à la deuxième longueur d'onde.

L'invention concerne également un système optique d'inscription/lecture d'informations pour support d'enregistrement, comportant une source optique (S) émettant un faisceau à une première longueur d'onde ($\lambda_1$) et un changeur de fréquence (DF) recevant ce faisceau et transmettant à un support d'enregistrement un faisceau d'inscription comprenant un premier faisceau à cette première longueur d'onde ($\lambda_1$) et un deuxième faisceau à une deuxième longueur d'onde ($\lambda_2$) inférieure a la première longueur d'onde, le deuxième faisceau étant utilisé seul pour la lecture.

Enfin l'invention concerne un support d'enregistrement optique caractérisé en ce qu'il comporte un matériau non linéaire présentant un seuil d'enregistrement tel qu'il enregistre une information à l'aide d'un premier faisceau d'une première longueur d'onde dans une partie seulement de la zone éclairée, les informations étant enregistrées de telle façon qu'elles ne puissent être lues que par un deuxième faisceau d'une deuxième longueur d'onde inférieure à la première longueur d'onde.

Le procédé de l'invention permet l'enregistrement/lecture sur un support préformaté sur lequel les informations de préformatage ont une résolution correspondant à un faisceau de lecture à la première longueur d'onde. Il comporte alors les étapes suivantes :

- lecture des informations de préformatage à l'aide des deux faisceaux superposés à un niveau de puissance faible (de l'ordre de quelques mW ou inférieur au mW);
- commutation des deux faisceaux superposés à un niveau de puissance élevé supérieur au niveau de puissance faible ;
- inscription d'informations de données sur le support d'informations par modulation des deux faisceaux à niveau de puissance élevée ou de l'un des deux faisceaux;
- blocage du premier faisceau et transmission du deuxième faisceau seul pour la lecture des informations de données.

L'invention concerne également un procédé caractérisé en ce que le blocage du premier faisceau se fait en un temps de blocage qui est de l'ordre de grandeur de 1ms.

Les différents objets et caractéristiques de l'invention apparaîtront plus clairement dans la description qui va suivre et dans les figures annexées qui représentent :

- la figure 1, un exemple général de réalisation du procédé et du système selon l'invention ;
- les figures 2a et 2b, un diagramme explicatif de l'enregistrement selon l'invention ;
- la figure 3, un exemple plus détaillé du système selon l'invention ;

- les figures 4, 5a et 5b, des exemples de doubleurs de fréquence selon l'invention ;
- les figures 6a, 6b, 7a et 7b, un exemple de réalisation d'un dispositif de filtrage utilisable dans le système de la figure 3;
- la figure 8, une variante de réalisation du système de la figure 3;
- la figure 9, un système permettant de focaliser au même point les deux longueurs d'ondes contenues dans le faisceau d'enregistrement;
- la figure 10, un système permettant d'enregistrer dans l'épaisseur du support d'enregistrement;
- les figures 11 et 12, des systèmes permettant de réguler la puissance de la source;
- les figures 13a, 13b, des diagrammes d'énergie explicatifs du procédé et du système selon l'invention;
- les figures 14, 15a, 15b, des exemples de supports d'enregistrement préformatés utilisables dans le cadre de l'invention.

Selon un procédé général d'enregistrement/lecture on dispose d'un support d'enregistrement en matériau non linéaire enregistrable à l'aide d'un faisceau optique de telle façon que seule la zone, qui est portée au-delà d'un seuil d'énergie subit une modification lisible optiquement (marque optique). Dans ce qui suit on désigne par support d'enregistrement la couche sensible dans laquelle sont enregistrées les informations.

Dans le cadre de l'explication qui suit on suppose que le support est immobile pendant la durée de l'insolation mais ces explications seraient valables également dans le cas où il se déplace.

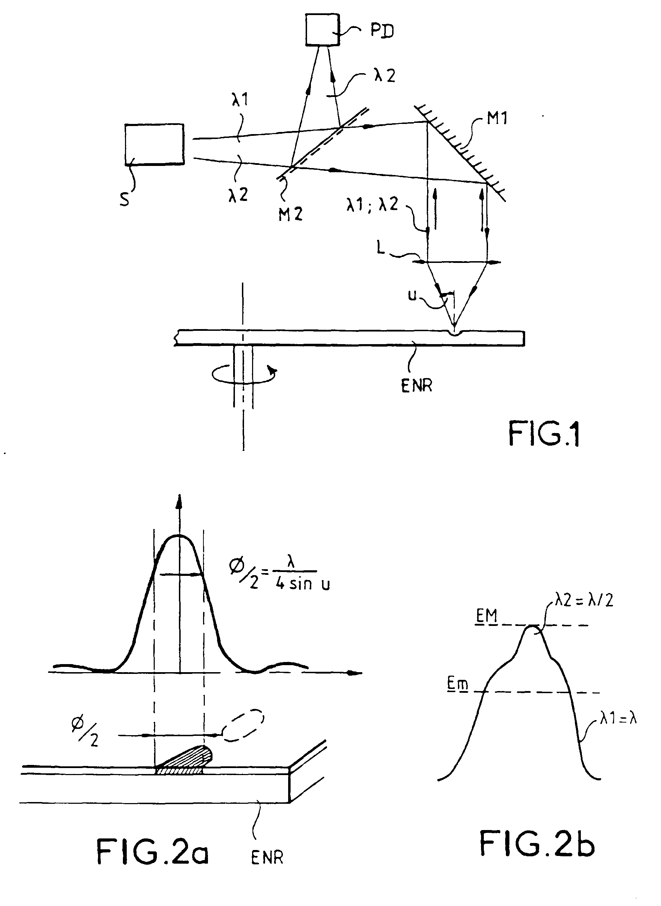

Un faisceau lumineux de longueur d'onde $\lambda 1 = \lambda$ incident sur une zone du support d'enregistrement présente dans cette zone des niveaux d'énergie présentant par exemple une répartition selon une courbe de Gauss, le maximum d'énergie se trouvant au centre de la zone éclairée. Sur la figure 1, le support d'enregistrement ENR étant en matériau non linéaire, seule la partie de la zone éclairée dont l'énergie reçue dépasse le seuil d'énergie d'enregistrement est donc enregistrée. Dans la suite de la description on désignera par "marque" la partie de cette zone éclairée qui change donc d'état physique.

Dans ces conditions le diamètre $\phi_{en}$ de la marque enregistrée est plus petit que le diamètre de la zone éclairée.

Pour la lecture, on utilise un faisceau lumineux dont la longueur d'onde $\lambda 2$ correspond à la résolution de la marque à lire. $\lambda 2$ est donc inférieure à la longueur d'onde d'enregistrement.

Un procédé général d'enregistrement/lecture selon l'invention consiste à disposer d'un support d'enregistrement en matériau non linéaire enregistrable à l'aide d'un faisceau optique de telle façon que seule la zone, qui est portée au-delà d'un seuil d'énergie change d'état physique c'est-à-dire est enregistrée. Un faisceau lumineux de longueur d'onde $\lambda 1 = \lambda$ sur une zone du support d'enregistrement présente dans cette zone des niveaux d'énergie présentant par exemple une répartition selon une courbe de Gauss, le maximum d'énergie se trouvant au centre de la zone éclairée. Le support d'enregistrement étant en matériau non linéaire, seule la partie de la zone éclairée dont l'énergie dépasse le seuil d'énergie d'enregistrement est donc enregistrée.

Dans ces conditions le diamètre de la marque enregistrée est plus petit que le diamètre de la zone éclairée.

Selon un procédé de l'invention, on prévoit de réaliser l'inscription d'informations à l'aide d'un faisceau d'inscription qui est la superposition de deux faisceaux optiques à deux longueurs d'ondes différentes $\lambda 1$ et $\lambda 2$. Par exemple, l'un des faisceaux est à $\lambda$ et l'autre est à $\lambda/2$.

En utilisant la somme des énergies à $\lambda 1$ et $\lambda 2$ on prévoit que le matériau du support d'enregistrement présente un seuil de non linéarité thermique (voir figure 2b) qui est situé entre le maximum des énergies EM des deux faisceaux à $\lambda 1$ et à $\lambda 2$ et un niveau d'énergie Em situé entre le niveau à 3db de la courbe d'énergie du faisceau à $\lambda 1$ et le maximum de la courbe à $\lambda 1$.

De préférence, le niveau Em est situé légèrement en-dessous du maximum d'énergie à $\lambda 1$. Selon ce choix, le diamètre de la marque inscrite sur le support d'enregistrement correspond sensiblement au diamètre d'éclairement sur le support du faisceau à $\lambda 2$.

Selon l'invention, pour la lecture, on utilise un faisceau lumineux dont la longueur d'onde $\lambda 2$ correspond à la résolution de la marque à lire, est donc inférieure à la longueur d'onde $\lambda 2$ précédente.

Dans la description qui suit on utilise un faisceau de longueur d'onde $\lambda 1 = \lambda$ qui permet d'enregistrer une marque dont le diamètre $\Phi/2$ est la moitié du diamètre $\Phi$ de la zone éclairée.

Le diamètre $\Phi$ de la tache de diffraction projetée sur le support vaut $\Phi = \frac{\lambda}{4 \sin u}$, vaut sin u étant l'ouverture numérique de l'objectif de focalisation (figure 1). A titre d'exemple, la figure 2 montre une marque de diamètre $\Phi/2$ obtenu après focalisation d'un spot de diamètre $\Phi$ sur un support "sensible" à l'énergie contenue dans un cylindre dont le diamètre vaut de l'ordre de $\Phi/2$. Ces mécanismes sont couramment rencontrés avec des supports qui présentent un seuil prononcé à l'enregistrement: couches magnétooptiques, changement de phase, ablation, etc. Pour mieux faire comprendre l'invention, à titre d'exemple, dans le cas de l'inscription d'informations sous forme de marques séparées, les zones éclairées de diamètre $\Phi$ correspondant à l'inscription de deux informations successives se chevauchent. Les marques inscrites de diamètre $\Phi/2$ sont alors très près les unes des autres. L'objet de l'invention est donc dans ce cas de lire l'information élémentaire de taille réduite d'un facteur 2 à l'inscription avec un rayonnement de longueur d'onde $\lambda 2 = \lambda/2$. Un tel faisceau passant dans l'objectif de focalisation L génère sur le disque un spot de lecture dont le diamètre vaut $\frac{\lambda}{4 \sin u}$. Ce diamètre est alors parfaitement adapté à la lecture des bits d'informations inscrits à la longueur d'onde $\lambda$ en mettant en jeu les mécanismes décrits ci-dessus.

A titre d'exemple le faisceau d'inscription a pour longueur d'onde sensiblement $\lambda 1 = 0,8$ μm et le faisceau de lecture a pour longueur d'onde $\lambda 2 = 0,4$ μm.

Selon le procédé de l'invention, le faisceau de lecture à la longueur d'onde $\lambda 2$ est dirigé vers le support d'enregistrement selon une direction colinéaire avec celle du faisceau d'enregistrement à la longueur d'onde $\lambda 1$.

Le faisceau de lecture est retransmis (réfléchi par exemple) vers un dispositif de détection optique qui détecte l'intensité du faisceau retransmis.

Dans le cas d'un enregistrement ayant affecté la nature physique du support d'enregistrement, il s'agit bien de détecter une variation de l'intensité du faisceau retransmis. Dans le cas d'un enregistrement thermo-magnétique, la lecture magnéto-optique se fait à l'aide de systèmes de détection qui exploitent la rotation de la polarisation de la lumière et il s'agit également de détecter une intensité lumineuse.

Selon le procédé de l'invention, on prévoit également lors de l'inscription de transmettre un faisceau d'inscription qui contient une longueur d'onde à $\lambda 1$ et une longueur d'onde à $\lambda 2$ (avec $\lambda 2 < \lambda 1$). Ce faisceau peut être la superposition d'un faisceau à la longueur d'onde $\lambda 1$ et d'un faisceau à la longueur d'onde $\lambda 2$. Par exemple, $\lambda 2$ est la longueur du faisceau de lecture, on peut transmettre à l'inscription en même temps que le faisceau à $\lambda 1$, le faisceau de lecture à $\lambda 2$. Cela permet éventuellement de lire simultanément l'inscription et ainsi de la contrôler.

La figure 1 représente un exemple général de système d'inscription/lecture selon l'invention.

Une source S émet un faisceau d'inscription à la longueur d'onde $\lambda 1$. Ce faisceau permet une inscription sur un support ENR comme cela est représenté en figure 2 et comme cela a été décrit précédemment, sur une partie de la zone éclairée. Le faisceau est focalisé sur le support d'enregistrement ENR par une lentille L.

La source S (ou une autre source) est également capable d'éclairer le support d'enregistrement avec un faisceau de lecture à la longueur d'onde $\lambda 2$. Le faisceau de lecture est transmis par le support d'enregistrement ENR à un photodétecteur PD qui permet ainsi de lire les informations sur le support ENR. Par exemple, dans le cas d'un support fonctionnant en réflexion, le faisceau de lecture est réfléchi comme c'est le cas sur la figure 1.

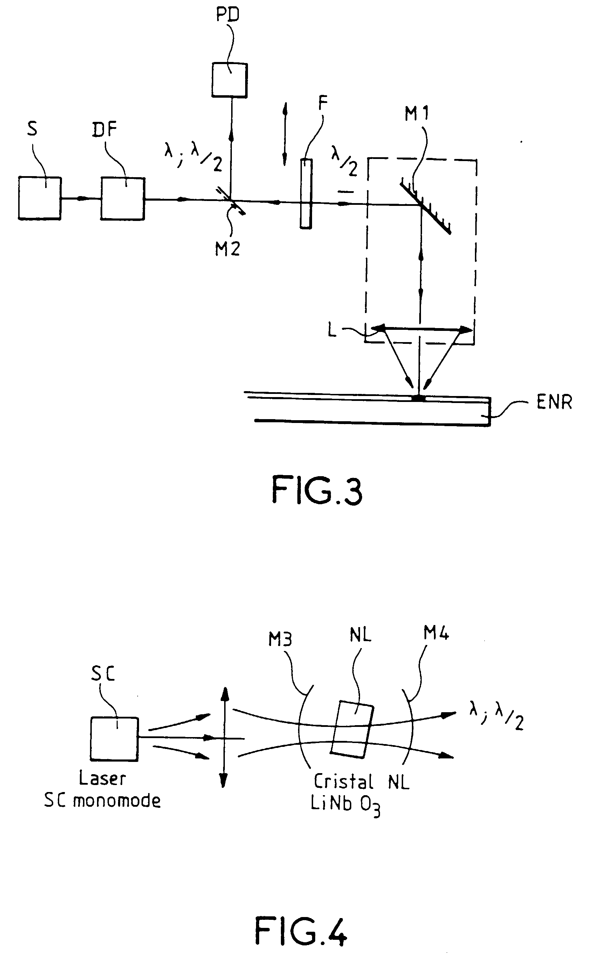

La figure 3 représente un exemple de réalisation plus détaillé du système de l'invention.

La source S émet un faisceau lumineux à la longueur d'onde $\lambda 1$. Un changeur de fréquence, par exemple, un doubleur de fréquence DF, reçoit ce faisceau et transmet deux faisceaux superposés dont l'un est à la longueur d'onde $\lambda 1 = \lambda$ et l'autre à la longueur d'onde moitié $\lambda 2 = \lambda/2$ résultant du doublage de fréquence. Un miroir M1 dirige ces deux faisceaux sur le support d'enregistrement ENR où ils sont focalisés par une lentille L. Une marque d'information peut être ainsi enregistrée. La modulation du faisceau d'enregistrment peut être obtenue par exemple par modulation de la source S.

La lumière de ces faisceaux est réfléchie par le support d'enregistrement. Un miroir dichroïque M2 réfléchit la lumière du faisceau de lecture à la longueur d'onde $\lambda 2$ vers le photodétecteur PD.

De plus, en mode lecture du système selon l'invention, le doubleur de fréquence DF transmet les deux longueurs d'onde $\lambda 1$ et $\lambda 2$. Cependant un filtre F amovible ou commandable peut bloquer la transmission du faisceau à la longueur d'onde $\lambda 1 = \lambda$.

A titre d'exemple, le système de la figure 3 comporte:

- un laser monomode modulé fonctionnant à la longueur d'onde $\lambda$ - par exemple $\lambda = 840$ nm
- un dispositif doubleur de fréquence générant avec une efficacité $\eta$ la longueur d'onde "bleue" $\lambda/2 \sim 420$ nm
- un système optique conventionnel assurant la focalisation et l'asservissement des spots sur le disque. Les trajets des faisceaux à $\lambda$ et $\lambda/2$ sont parfaitement colinéaires.

Dans le présent système on tire profit du rendement limité de conversion du doubleur ($\eta \sim$ quelques % typiquement) pour générer deux faisceaux $\lambda$ et $\lambda/2$ d'intensités respectives $(1 - \eta)I_o$ et $\eta \, I_o$ ($I_o$ intensité incidente sur le doubleur).

En effet, la lecture, non destructive de l'information enregistrée sur le disque, conduit à utiliser une puissance de lecture nettement plus faible que celle nécessaire à l'inscription. Typiquement, on met en jeu les niveaux de puissance suivants:

     Inscription $\sim$ 20-40 mW
     Lecture $\sim$ 2 - 5 mW

Le doubleur de fréquence DF peut être conçu selon deux technologies différentes adaptées à la génération des faisceaux aux longueurs d'onde $\lambda$ et $\lambda/2$:

Selon une première technologie, on utilise un laser doublé en fréquence par focalisation d'un laser semiconducteur monomode dans un cristal non linéaire. Un schéma de laser semiconducteur doublé en configuration externe est donné sur la figure 4. Il comporte:

- un laser semiconducteur SC monomode GaAs/GaAlAs délivrant 100 mW à $\lambda$ = 840 nm

- un cristal NL, par exemple $KNbO_3$, placé à l'intérieur d'un résonateur M3, M4, adapté aux longueurs d'ondes $\lambda$ et $\lambda/2$.

Des puissances émises en continu de l'ordre de 10 mW à $\lambda/2$ = 420 nm ont été obtenues à partir de structures lasers de ce type (voir par exemple le document "432 nm source based on efficient second harmonic generation of GaAlAs diode laser radiation of self locking external resonant cavity", G.L. Dixon et al - Optic. letters. 14 - 731 1989).

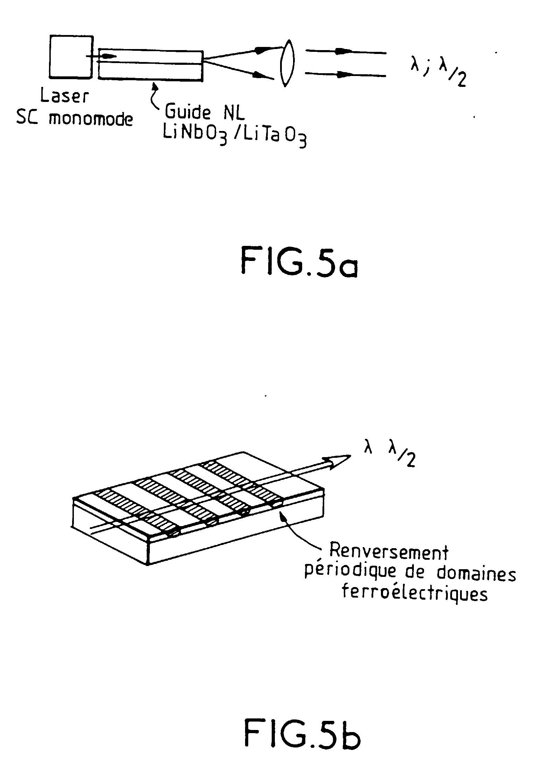

Selon une deuxième technologie, on utilise la propagation guidée d'un faisceau laser dans un cristal non linéaire. Le principe de ce doublage de fréquence par propagation dans un guide $LiNbO_3$ ou $LiTaO_3$ est présenté sur les figures 5a et 5b. Pour maintenir l'accord de phase sur une longueur d'interaction de l'ordre de 5 à 10 mm, le guide est constitué de régions présentant un renversement périodique des domaines (période spatial $\Lambda \sim 3,6$ $\mu$m dans $LiTaO_3$).

Les ordres de grandeurs des puissances optiques disponibles sur le faisceau à $\lambda 1$ (dans le rouge par exemple) et le faisceau à $\lambda 2$ (dans le bleu par exemple) sont donc très largement compatibles avec les procédés d'enregistrement et de lecture d'informations à haute densité selon l'invention.

En ce qui concerne le filtre F, dans le mode de fonctionnement du système enregistreur/lecteur, il est important de pouvoir relire l'information à la longueur d'onde $\lambda 2$ seule. Dans ces conditions la puissance optique disponible à la longueur d'onde $\lambda 1$ doit être obturée rapidement par exemple par l'intermédiaire d'un modulateur électrooptique. Le filtre F doit donc réaliser les deux fonctions suivantes:

- obturation rapide du faisceau à la longueur d'onde $\lambda 1$ avec un temps de réponse inférieur à 100 $\mu$s typiquement;
- transmission permanente du faisceau à la longueur d'onde $\lambda 2$ de faible puissance.

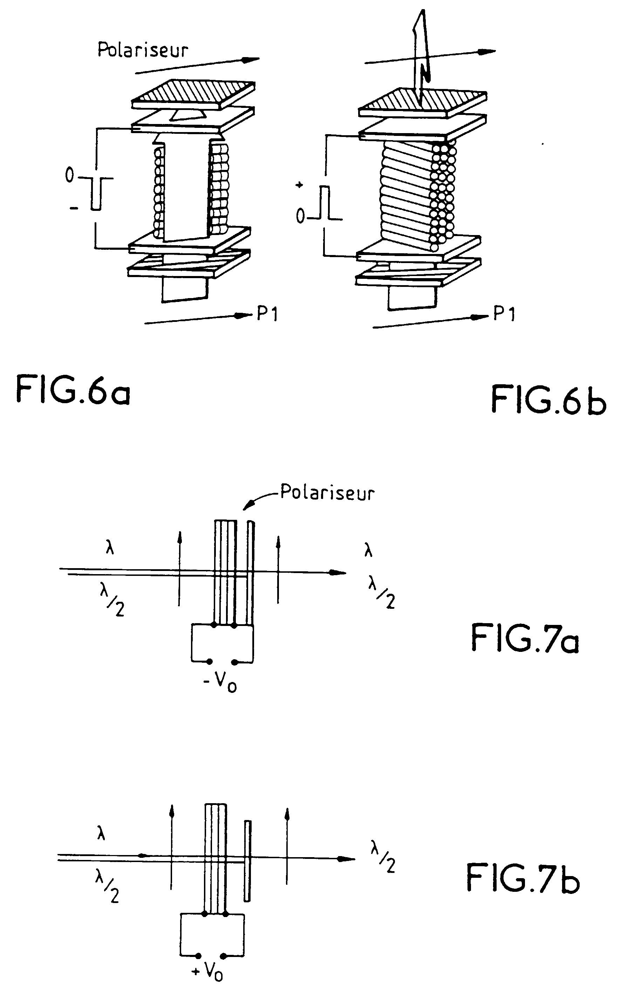

Cette fonction, non conventionnelle pour un modulateur, peut être réalisée par un cristal électrooptique ($LiNbO_3$, $LiTaO_3$ par exemple) ou par une cellule à cristal liquide ferroélectronique dont le mode de fonctionnement est le suivant: l'application d'une tension de commande $\pm V_o$ fait tourner les molécules d'un angle $2\theta$ dans un plan parallèle à la face d'entrée de la cellule. Un faisceau incident polarisé selon la direction P1, comme indiqué sur la figure 6a (tension $-V_o$), reste polarisé dans cette même direction après traversée de la cellule. Après rotation des molécules ($2\theta$) sous l'effet d'une tension inverse, la polarisation initiale est affectée par l'effet de biréfringence $\Delta n$ de la molécule. Après traversée du polariseur, l'intensité transmise est donnée par:

$$I_p = I_o \sin^2 4\theta \times \cos^2 \frac{\pi d \Delta n}{\lambda}$$

- Pour $\Delta n$ = O (V = $- V_o$ sur figures 6a et 7a les longueurs d'ondes $\lambda$ et $\lambda/2$ sont transmises (mode enregistrement)
- Pour $\Delta n \neq 0$ (V = $+V_o$ sur figures 6b et 7b) et d = $\lambda/2\Delta n$ la longueur d'onde $\lambda$ n'est pas transmise, par contre la longueur d'onde $\lambda/2$ est transmise totalement.

Le modulateur à cristal liquide ferroélectrique peut être réalisé comme suit:

- cellule ferroélectrique V = $\pm 8$ volts
- épaisseur d $\sim 10$ $\mu$m
- transmission optique > 80 % à $\lambda$ et $\lambda/2$.

Le filtre F peut également être réalisé sous la forme d'un filtre dichroïque qui est introduit mécaniquement sur le trajet du faisceau. En l'absence de filtre, les deux longueurs d'onde $\lambda$ et $\lambda/2$ sont transmises. En présence du filtre, seule la longueur d'onde $\lambda/2$ est transmise.

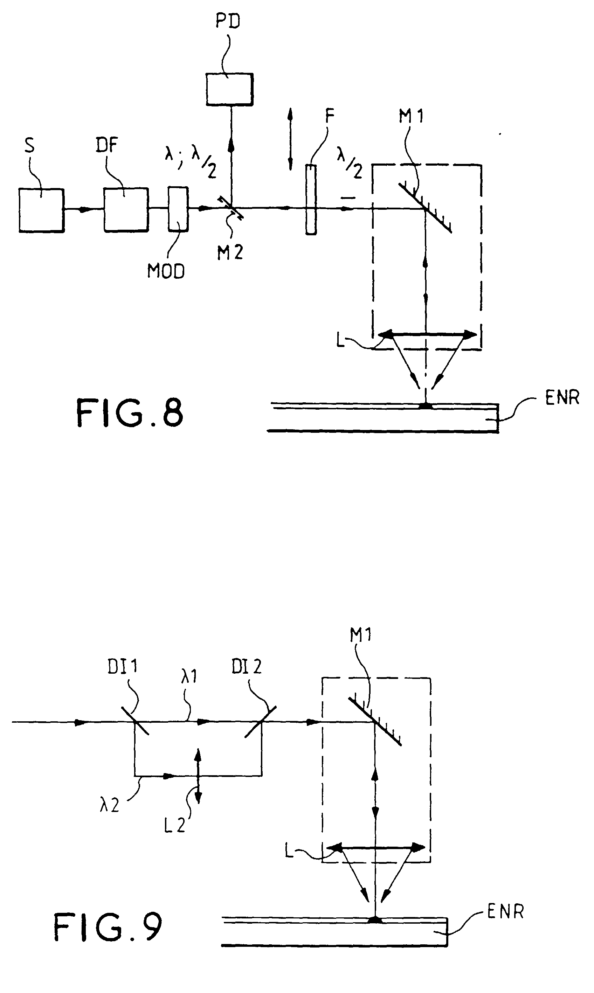

La figure 8 représente une variante de réalisation du système de la figure 3. En effet, dans le système de la figure 3, les faisceaux d'inscription et de lecture sont modulés par modulation du fonctionnement de la source S. Dans le système de la figure 8, on a prévu un modulateur optique MOD, tel un modulateur électrooptique ou acousto-optique (en $LiNbO_3$ par exemple), situé entre la source S et le support d'enregistrement ENR. Selon le mode de réalisation de la figure 8, ce modulateur est situé entre le doubleur de fréquence DF et le support d'enregistrement et plus précisément entre le doubleur de fréquence et le dispositif dichroïque M2. Il aurait pu également être placé entre la source S et le doubleur.

Sur la figure 8, on a conservé le filtre F. Cependant selon une autre variante de réalisation non représentée, on peut envisager de ne pas prévoir de filtre F. Dans ce cas le même modulateur (MOD) permet lors de la lecture de bloquer la transmission de la lumière à la longueur d'onde d'enregistrement $\lambda 1$ et de laisser passer uniquement que la lumière à la longueur d'onde de lecture $\lambda 2$. Le modulateur rempli alors également le rôle du filtre F.

On voit donc que pour l'inscription, on transmet deux longueurs d'ondes $\lambda 1$ et $\lambda 2$. L'optique de focalisation L doit donc de préférence être achromatique pour que les deux longueurs d'ondes $\lambda 1$ et $\lambda 2$ focalisent dans le même plan que le support d'enregistrement. Si ce n'est pas le cas on peut prévoir comme représenté en figure 9, un circuit qui sépare les deux longueurs d'ondes selon deux trajets et dont l'un des trajets modifie la convergence de l'un des faisceaux de façon à ce que les deux longueurs d'onde convergent dans le même plan. Par exemple, on prévoit après le filtre F une lame dichroïque DI1 qui transmet la longueur d'onde λ1 et qui réfléchit la longueur d'onde λ2. Sur le trajet de l'onde λ2 on prévoit une lentille L2 de correction de focalisation. Ensuite les deux longueurs d'ondes sont recombinées par une autre lame D12. La lentille de focalisation L focalise alors les deux longueurs d'ondes λ1 et λ2 dans le même plan.

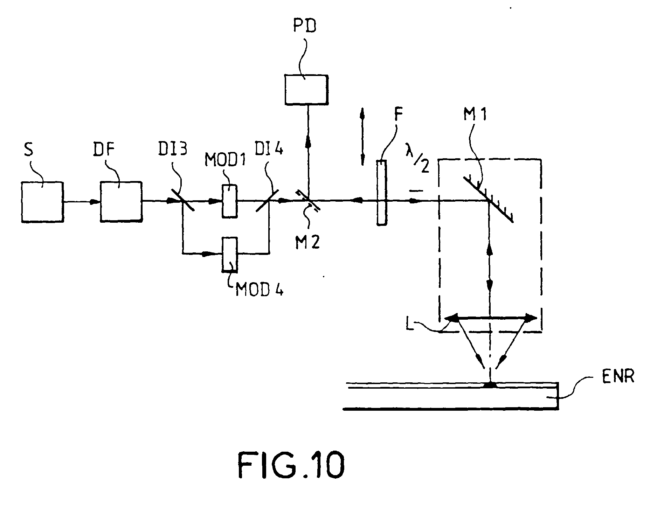

Comme le système de l'invention prévoit à l'inscription de transmettre au support d'enregistrement deux longueurs d'ondes λ1 et λ2, si l'objectif de focalisation n'est pas achromatique, les deux longueurs d'ondes λ1 et λ2 focalisent dans des plans différents et l'invention permet alors d'enregistrer dans l'épaisseur du support d'enregistrement. La figure 10 prévoit donc de séparer les deux longueurs d'ondes à l'aide d'une lame dichroïque D13 et de moduler séparément les deux longueurs d'ondes à l'aide de modulateurs MOD1 et MOD2. Ensuite, les deux ondes sont recombinées (DI4) et transmises au support d'information qui enregistre dans deux plans différents du support des informations différentes.

En application de ce qui précède, l'invention concerne également un support d'enregistrement en matériau non linéaire thermiquement tel qu'il enregistre les informations à l'aide d'un faisceau d'une première longueur d'onde λ1. La densité d'enregistrement des informations est telle qu'il est difficile ou quasi-impossible de relire les informations avec un faisceau de même longueur d'onde λ1. Il faut avoir recours à un faisceau de plus petite longueur d'onde λ2 permettant donc une plus grande résolution. Selon une réalisation préférée de l'invention la longueur d'onde λ2 est moitié de la longueur d'onde λ1.

Pour un fonctionnement correct il faut, qu'à la longueur d'onde d'enregistrement λ1, le support d'enregistrement absorbe suffisamment l'énergie pour que le faisceau fasse une marque. Il faut également dans le cas d'une lecture par réflexion qu'à la longueur d'onde de lecture λ2, le support réfléchisse suffisamment le faisceau de lecture.

Une réalisation pratique de l'invention prévoit d'enregistrer le support avec une longueur d'onde située dans l'infrarouge et de le lire avec une longueur d'onde située dans le bleu.

Le support d'enregistrement peut être en matériau à enregistrement non effaçable et peut être enregistré par l'un des effets suivants:

- ablation thermique du matériau d'enregistrement (le matériau est par exemple à base de Tellure);
- transformation physique du matériau, le matériau d'enregistrement étant constitué, par exemple, de plusieurs couches de matériaux différents qui sous échauffement interagissent pour constituer un alliage dans la zone d'enregistrement;
- constitution d'une bulle dans la zone d'échauffement, le matériau comportant une couche interne en matériau tel que sous échauffement ce matériau se décompose et donne lieu à une bulle dans le sein du support d'enregistrement;
- changement de phase du matériau d'enregistrement celui-ci passant sous échauffement d'un état cristallin, par exemple à un état amorphe.

Le support d'enregistrement peut être également à matériau réinscriptible. Le matériau est alors par exemple un matériau magnétooptique (ou thermomagnétique) ou à changement de phase qui sous échauffement et application d'un champ magnétique peut subir des modifications dans les orientations des domaines magnétiques. La lecture se fait alors par effet Kerr ou par effet Faraday. Selon ces effets, un faisceau optique polarisé voit sa polarisation tourner sous l'effet d'un champ magnétique.

Le support d'enregistrement peut être formaté c'est-à-dire être préparé pour que l'enregistrement se fasse sur le support selon un format et des règles déterminées.

Le support d'enregistrement, par exemple, peut être un disque. Le formatage consiste alors à préparer le support pour que les informations soient enregistrées selon des pistes concentriques ou une piste en spirale. Le support comporte des moyens qui "prédessinent" ces pistes. Ces moyens peuvent être des pistes de guidage (format du type Continu Composite) ou des repères ou "drapeaux" disposés régulièrement sur le disque le long de la piste à enregistrer (format Echantillonné).

En position d'attente du système, dans le cas d'utilisation d'un support formaté selon le type "Continu Composite" la source laser fonctionne et un faisceau est allumé en permanence tout le long de la piste. Dans le cas d'utilisation d'un support formaté selon le type "Echantillonné", la source laser fonctionne uniquement au moment de la lecture des drapeaux (et/ou informations d'adresses). Le format Echantillonné permet ainsi d'économiser la source.

Par ailleurs, l'inscription d'informations nécessite de régler la source lumineuse à un niveau d'énergie suffisant pour un spot dont le diamètre est bien réglé. On prévoit alors sur le support d'enregistrement des plages de réglages réservées à ce réglage. Avant enregistrement, on enregistre des marques de test que l'on veut relire à l'aide d'un faisceau de lecture pour s'assurer que l'enregistrement de ces marques est correct. La procédure d'enregistrement de ces spots est donc telle qu'on prévoit un premier passage pour l'enregistrement et un deuxième passage pour la lecture de contrôle.

Selon l'invention, la combinaison du faisceau d'inscription à deux longueurs d'ondes avec un support d'enregistrement présentant un seuil de non linéarité thermique implique une relative stabilité de la puissance de la source. En effet, le seuil de non linéarité étant fixé, il convient de fixer la puissance d'émission de la source de façon que le seuil d'inscription soit situé sur la courbe de distribution d'énergie de l'onde à λ1 à un niveau permettant une inscription d'une marque dont le diamètre correspond au diamètre d'éclairement avec l'onde à λ2. L'invention prévoit donc également de régler la puissance de la source S.

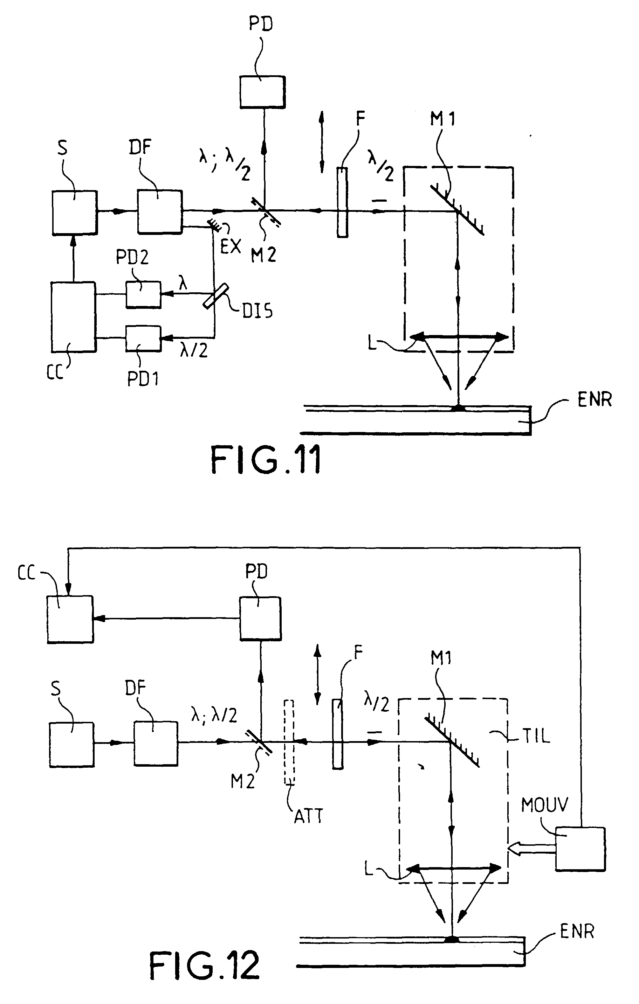

Pour cela, selon le système de la figure 11 on prélève une partie du faisceau lumineux (dispositif EX) et on transmet cette partie prélevée à un photodétecteur qui délivre un signal électrique proportionnel à la puissance du faisceau lumineux et qui agit en contre-réaction sur le réglage de la puissance de la source S.

Sur la figure 11, on a prévu deux photodétecteurs PD1 et PD2 qui reçoivent, par un séparateur dichroïque D15, respectivement la lumière de longueur d'onde λ/2 et la lumière de longueur d'onde λ. Ces photodétecteurs fournissent des signaux électriques représentatifs des niveaux de puissance optique qu'ils détectent. Le circuit CC commande la source S en fonction de ces signaux électriques. Le fait de détecter séparément les niveaux de puissance des ondes à λ et λ/2 présente de l'intérêt car une augmentation de puissance de la source a une influence non linéaire sur la conversion de la lumière en λ/2.

Le dispositif EX a été placé en sortie du doubleur de fréquence DF mais il aurait pu être placé n'importe où sur le trajet du faisceau lumineux.

Selon une variante de réalisation de l'invention, la mesure de puissance du faisceau d'écriture peut être faite par le photodétecteur PD utilisé pour la lecture. En effet, on a vu que l'onde λ/2 contenue dans le faisceau d'écriture pouvait être réfléchie vers le photodétecteur PD. Dans ces conditions, le niveau d'énergie du faisceau qui vient d'écrire sur le support d'enregistrement peut être mesuré par le photodétecteur PD. Celui-ci délivre un signal électrique à un circuit de commande CC qui commande en conséquence la source S.

De plus, on peut prévoir que le dispositif MOUV, qui commande le déplacement de la tête d'inscription/lecture TIL par rapport au support d'enregistrement, communique au circuit de commande CC la position de la tête TIL. Ainsi le circuit de commande peut adapter le niveau de puissance de la source selon la position de la tête. Par exemple, dans le cas où le support d'enregistrement est un disque, le circuit de commande pourra commander un niveau d'énergie supérieur lorsque la tête est à la périphérie du disque et diminuer le niveau d'énergie lorsque la tête se dirige vers le centre du disque.

Enfin selon une autre variante de réalisation représentée en pointillés sur la figure 12, on peut prévoir un dispositif d'atténuation optique ATT placé sur le trajet du faisceau d'inscription et qui est soit introduit mécaniquement sous la commande du photodétecteur PD de la figure 12 ou des photodétecteurs PD1, PD2 de la figure 11. Ce dispositif d'atténuation peut être également un modulateur électrooptique tel qu'une cellule à cristal liquide.

On va maintenant décrire un perfectionnement de l'invention permettant d'obtenir des marques de dimensions constantes même en cas de légères fluctuations de la puissance de la source S.

Pour cela, on prévoit:

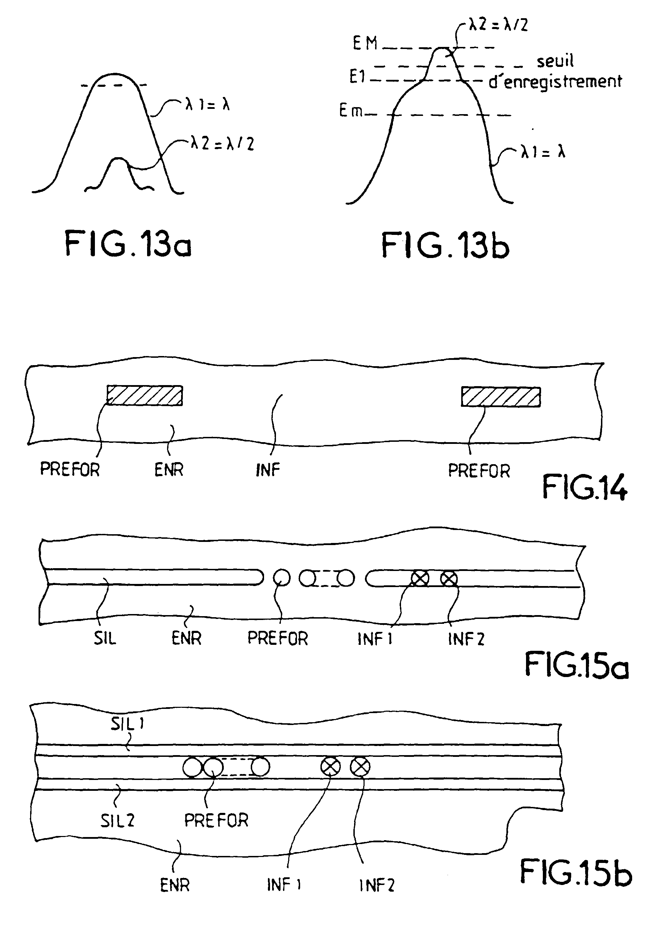

- d'une part de transmettre lors de l'écriture deux faisceaux l'un à la longueur λ1, l'autre à une longueur d'onde λ2 inférieure ((λ1)/2 par exemple). On transmet donc deux ondes dont les profils de distribution d'énergie sont représentés en figure 13a. Les énergies de ces deux ondes se superposent comme cela est représenté en figure 13b. On obtient un profil de distribution de l'onde λ1 en courbe de Gauss dont le sommet de la courbe est surmonté de l'excédent d'énergie fourni par l'onde de longueur d'onde inférieure en λ2 selon l'exemple pris;

- d'autre part d'adapter le seuil de gravure du support d'enregistrement aux énergies des faisceaux transmis (ou réciproquement) de telle façon que le seuil de gravure se situe à une valeur supérieure à l'énergie maximale E1 fournie par l'onde à λ1 et inférieure à la somme des énergies EM fournies par les ondes à λ1 et à λ2. Ce seuil de gravure se situe donc dans l'excédent d'énergie correspondant à la longueur d'onde λ2 tel que cela est représenté en figure 13b.

De cette façon, le diamètre de la marque réalisée sur le support d'enregistrement dépend étroitement de la longueur d'onde λ2 et permet une certaine fluctuation des niveaux d'énergie des faisceaux par rapport au seuil d'enregistrement du support. Il suffit que ce seuil se situe dans l'excédent d'énergie correspondant au faisceau de longueur d'onde λ2.

Dans ce qui précède, on a supposé que le support d'enregistrement est fixe. Dans le cas où il se déplace par rapport aux faisceaux, le fonctionnement est similaire ; le mouvement du support d'enregistrement intervient pour examiner les distributions d'énergies.

A titre d'exemple le faisceau d'inscription a pour longueur d'onde sensiblement λ1 = 0,8 μm et le faisceau de lecture a pour longueur d'onde λ2 = 0,4 μm.

Selon le procédé de l'invention, le faisceau de lecture à la longueur d'onde λ2 est dirigé vers le support d'enregistrement selon une direction colinéaire avec celle du faisceau d'enregistrement à la longueur d'onde λ1.

Le faisceau de lecture est retransmis vers un dispositif de détection optique qui détecte l'intensité du faisceau retransmis.

Dans le cas d'un enregistrement ayant affecté la nature physique du support d'enregistrement, il s'agit bien de détecter une variation de l'intensité du faisceau retransmis. Dans le cas d'un enregistrement magnétique, la lecture magnéto-optique se fait à l'aide de systèmes de détection qui exploitent la rotation de la polarisation de la lumière et il s'agit également de détecter une intensité lumineuse.

Dans le système de la figure 3 décrit précédemment et appliqué à l'inscription selon la figure 13b, la source S émet un faisceau à une longueur d'onde $\lambda 1$ qui ne permet pas une inscription sur un support ENR. Comme cela est représenté sur la figure 1 et comme cela a été décrit précédemment, le maximum d'énergie fournie par ce faisceau est inférieur au seuil d'écriture du support d'enregistrement. La source S émet également un faisceau à une longueur d'onde $\lambda 2$ qui combiné avec le faisceau à $\lambda 1$ permet l'écriture sur le support d'enregistrement comme cela a été décrit précédemment. Le faisceau est focalisé sur le support d'enregistrement ENR par une lentille L.

Pour la lecture, la source S (ou une autre source) est également capable d'éclairer le support d'enregistrement avec le faisceau de lecture à la longueur d'onde $\lambda 2$ inférieure à $\lambda 1$. Le faisceau de lecture est transmis par le support d'enregistrement ENR à un photodétecteur PD qui permet ainsi de lire les informations sur le support ENR. Par exemple, dans le cas d'un support fonctionnant en réflexion, le faisceau de lecture est réfléchi comme c'est le cas sur la figure 1.

En appliquant ce principe, les systèmes des figures 3 et 8 sont applicables à cette variante de l'invention.

Le procédé de l'invention permet d'inscrire et de lire sur des supports préformatés, c'est-à-dire des supports comportant des zones où sont inscrites des informations de préformatage telles que adresses et drapeaux, etc (voir figure 14).

La figure 14 représente un support d'enregistrement à format échantillonné (désigné SSF dans la technique) selon lequel des informations de préformatage PREFOR sont inscrites de place en place sur le support ENR. Le système d'enregistrement doit lire ces informations de préformatage et inscrire des informations de données INF entre deux zones d'informations de préformatage PREFOR. Le suivi de piste se fait en se référant aux informations de préformatage, et entre les zones d'information de préformatage le système fonctionne sur sa lancée.

Les informations de préformatage peuvent être inscrites sur le support d'enregistrement de telle façon qu'elles puissent être lues à une première longueur d'onde $\lambda 1$.

Dans ce cas, le procédé selon l'invention prévoit:

- de lire les informations de préformatage à un niveau de puissance habituelle de lecture (de l'ordre du mW ou de quelques mW ou moins) à l'aide des deux faisceaux de longueurs d'ondes $\lambda 1$ et $\lambda 2$ (selon ce qui précède $\lambda 1 = \lambda$ et $\lambda 2 = \lambda/2$). A ces niveaux de puissance, le niveau du faisceau à $\lambda 2$ est faible, voire négligeable, et le niveau de puissance du faisceau de lecture correspond à celui du faisceau $\lambda 1$;
- de commuter les niveaux de puissance des faisceaux $\lambda 1$ et $\lambda 2$ de façon à leur donner des niveaux acceptables pour l'écriture sur le support d'enregistrement (de l'ordre de grandeur de la dizaine de mW voire plusieurs dizaines de mW, typiquement 10 à 15 mW). Comme cela est décrit précédemment, le niveau maximum du faisceau à $\lambda 1$ doit être inférieur au seuil d'enregistrement sur le support et la somme des énergies fournies par les deux faisceaux doit permettre d'inscrire sur le support;
- modulation de l'un ou des deux faisceaux de façon à inscrire des informations sur le support;
- commutation du filtre (F sur la figure 8) de façon à interdire la transmission du faisceau à $\lambda 1$. La lecture est effectuée, après écriture, à l'aide du faisceau à $\lambda 2$, à la puissance de lecture (de l'ordre du mW par exemple).

Cette lecture est donc réalisée avec un faisceau de bien meilleure résolution que celui à $\lambda 1$.

Il n'est pas nécessaire que le temps de commutation de blocage soit très rapide. Dans les séquences du type "un tour de disque pour inscrire, un tour pour lire" il suffit généralement qu'il soit suffisamment court par rapport à la durée d'un tour (20 ms pour une vitesse de rotation de 3000 T/mn).

Selon une variante de ce procédé, on peut prévoir lors de l'étape d'écriture, d'écrire dans les zones réservées aux informations de préformatage, des informations de synchronisation et utilisées alors en lecture à l'aide du faisceau à $\lambda 2$. Ce mode est susceptible de conduire à une densité de format accrue.

Outre l'avantage de ne pas nécessiter de modulateur de blocage rapide, ce mode est bien adapté à la réalisation de systèmes compatibles avec les systèmes existants.

Les informations de préformatages inscrites sur le support d'enregistrement peuvent également avoir une résolution adaptée à une lecture à la longueur d'onde $\lambda 2$ (avec $\lambda 2 = \lambda/2$) (ou une longueur d'onde supérieure à $\lambda 2$).

Le procédé selon l'invention prévoit donc:

- de lire les informations de préformatage à l'aide d'un faisceau à $\lambda 2$, le faisceau à $\lambda 1$ étant alors bloqué (par exemple par le filtre F de la figure 8). La puissance de lecture est donc celle du faisceau à $\lambda 2$. Le faisceau $\lambda 2$ est donc adapté en longueur d'onde et en puissance à la lecture des informations de préformatage;
- de commuter le filtre de façon à débloquer le faisceau à $\lambda 1$ et de permettre sa transmission au support d'enregistrement en même temps que le faisceau à $\lambda 2$. Ces faisceaux sont transmis à puissance élevée;
- de moduler des faisceaux à $\lambda 1$ à $\lambda 2$ pour inscription

des informations de données;

- de bloquer le faisceau à λ1 par commutation du filtre pour permettre la lecture à l'aide du faisceau λ2, et cela après écriture.

Il est à noter que la commutation du filtre pour blocage et déblocage du faisceau à λ1 doit être rapide : de préférence de l'ordre de grandeur de la période de modulation du signal à enregistrer, et cela notamment pour le déblocage après lecture des informations de préformatage et avant écriture des informations de données.

Cependant, le temps de déblocage peut être plus grand que la période de modulation du signal à enregistrer; mais on a intérêt à ce qu'il soit inférieur au temps prévu dans le mode de fonctionnement décrit précédemment de façon à obtenir une densité plus grande des enregistrements.

La lecture des informations de données peut alors se faire très rapidement après l'écriture du fait de l'utilisation d'un filtre à commutation rapide.

Ce procédé présente l'avantage de conduire à des formats denses.

Les figures 15a et 15b représentent des supports d'enregistrement à formats continus composites (désignés CCS dans la technique) dans lesquels le formatage comporte des zones d'informations de formatage (comme en figure 14) mais également un tracé de la piste d'enregistrement réalisé, par exemple, sous la forme d'une gravure de sillons dans le support d'enregistrement. La figure 15a représente un support d'enregistrement ENR portant au moins un sillon prégravé SIL et de place en place des informations de préformatage. Les informations de données telles que INF1 et INF2 sont inscrites sur le sillon SIL. La figure 15b représente un support d'enregistrement ENR dans lequel deux sillons prégravés SIL1, SIL2 délimitent une piste d'enregistrement. Les informations de préformatage PREFOR sont inscrites entre les deux sillons. L'inscription d'informations telles que INF1 et INF2 se fait ensuite entre ces sillons.

Dans ce type de format, lors de l'inscription, le système prévoit donc un suivi de la piste d'enregistrement par suivi de sillons prégravés.

Pour cela, les deux modes de fonctionnement décrits précédemment peuvent être appliqués. Mais en plus, pour réaliser le suivi du tracé de piste, on prévoit que lors de l'inscription, une partie au moins des faisceaux d'inscription soit réfléchie par le support d'enregistrement vers un ou des photodétecteurs et vers un système de suivi de piste. La lumière réfléchie vers le ou les photodétecteurs peut être à λ1 ou à λ2, ou un mélange de ces deux longueurs d'ondes.

Il est à noter que ces procédés d'enregistrement lecture liés à des supports d'enregistrements préformatés sont adaptables à des procédés d'inscription dans lesquels le seuil d'enregistrement du support d'enregistrement est inférieur à la valeur maximale de l'onde à λ1 comme cela est représenté en figure 2a. Et il est possible de ne transmettre que λ1 pour écrire.

Le système selon l'invention permet donc:

- un enregistrement à la longueur d'onde λ par modulation du laser semiconducteur et contrôle en temps réel du signal inscrit sur le support à la longueur d'onde λ/2. Les faisceaux sont colinéaires dans le trajet de la tête optique;
- une lecture de l'information à la longueur d'onde λ/2 seule. Un filtre passe-bande ou un miroir dichroïque est interposé sur le faisceau issu du doubleur. Il protège le support de la puissance optique disponible à la longueur d'onde λ.

Les avantages du système de l'invention sont les suivants:

- le dispositif présenté contient un laser et un composant doubleur de fréquence générant deux faisceaux colinéaires (ou éventuellement rendus colinéaires) aux longueurs d'ondes λ et λ/2
- l'intensité du faisceau de lecture étant plus faible que celle requise pour l'inscription de l'information, le composant doubleur fonctionne avec une efficacité de conversion volontairement limitée. Cette condition offre un grand choix de solutions à partir de cristaux doubleurs utilisés dans leur volume ou en optique guidée
- la solution proposée ne nécessite pas le développement d'une source laser à la longueur d'onde λ2 ("bleue") de puissance
- un gain pouvant atteindre un facteur 4 sur la capacité de stockage est obtenu.

**Revendications**

1. Procédé optique d'inscription/lecture d'informations sur un support d'enregistrement selon lequel l'inscription d'informations est réalisée à l'aide d'un faisceau d'inscription comportant la superposition d'au moins un premier faisceau optique à une première longueur d'onde ($\lambda_1$) et au moins un deuxième faisceau optique à une deuxième longueur d'onde ($\lambda_2$) inférieure à la première longueur d'onde, caractérisé en ce que la lecture étant réalisée à l'aide du deuxième faisceau à la deuxième longueur d'onde.

2. Procédé selon la revendication 1, caractérisé en ce que le support d'enregistrement est en matériau présentant un seuil de non linéarité thermique à l'enregistrement situé entre le maximum des sommes des énergies des deux faisceaux et un niveau d'énergie situé sensiblement en-dessous du maximum d'énergie du premier faisceau.

3. Procédé selon la revendication 1, caractérisé en ce que le support d'enregistrement (ENR) est en matériau non linéaire présentant un seuil d'énergie d'enregistrement supérieur au maximum d'énergie fournie par le premier faisceau et inférieur à la somme des énergies fournies par les premier et deuxième faisceaux à l'enregistrement.

**4.** Procédé selon la revendication 1, caractérisé en ce que le support d'enregistrement est en matériau présentant un seuil de non linéarité thermique tel que les dimensions de la marque réalisée par le faisceau d'inscription correspondent aux dimensions de la tache du deuxième faisceau.

**5.** Procédé selon la revendication 1, caractérisé en ce que la deuxième longueur d'onde est sensiblement égale à la moitié de la première longueur d'onde.

**6.** Procédé selon la revendication 1, caractérisé en ce que le faisceau à la deuxième longueur d'onde est transmis ou est réfléchi par le support d'enregistrement vers un photodétecteur pour contrôler chaque information inscrite par la superposition du premier faisceau et du deuxième faisceau.

**7.** Procédé selon la revendication 6, caractérisé en ce que le photodétecteur fournit un signal représentant l'intensité du faisceau lumineux qu'il reçoit pour réguler la puissance de la source.

**8.** Procédé selon la revendication 1, caractérisé en ce que la première longueur d'onde est située dans la gamme des longueurs d'onde infrarouges et la deuxième longueur d'onde est située dans la gamme des longueurs d'ondes du bleu.

**9.** Procédé selon la revendication 1, caractérisé en ce que sur un support d'enregistrement le premier faisceau détermine une zone éclairée et en ce que les zones éclairées correspondant à deux informations voisines se recouvrent partiellement.

**10.** Procédé selon la revendication 1, caractérisé en ce que durant la lecture, le deuxième faisceau optique est dérivé du premier faisceau optique et la lumière de ce premier faisceau, non utilisée pour obtenir le deuxième faisceau, a son trajet bloqué vers le support d'enregistrement.

**11.** Procédé selon la revendication 3, caractérisé en ce que les deux faisceaux convergent vers le même point du support d'enregistrement.

**12.** Procédé selon la revendication 1, caractérisé en ce que le premier et le deuxième faisceau sont colinéaires.

**13.** Procédé selon la revendication 1, caractérisé en ce que le diamètre de la marque inscrite est sensiblement égal à la moitié du diamètre de la tache lumineuse faite par le premier et le deuxième faisceaux sur le support d'enregistrement.

**14.** Procédé selon la revendication 1, caractérisé en ce que les deux faisceaux aux deux longueurs d'ondes ($\lambda 1$, $\lambda 2$) sont modulés séparément et sont focalisés dans deux plans du support d'enregistrement.

**15.** Procédé selon la revendication 1, caractérisé en ce qu'il permet l'enregistrement/lecture sur un support préformaté sur lequel les informations de préformatage sont telle qu'elles sont lisibles par un faisceau de lecture à la première longueur d'onde ($\lambda 1$) et qu'il comporte les étapes suivantes :

- lecture des informations de préformatage à l'aide des deux faisceaux superposés à un niveau de puissance faible , de l'ordre de quelques mW ou inférieur au mW;
- commutation des deux faisceaux superposés à un niveau de puissance élevé supérieur au niveau de puissance faible ;
- inscription d'informations de données sur le support d'informations par modulation des deux faisceaux à niveau de puissance élevée ou de l'un des deux faisceaux ;
- blocage du premier faisceau et transmission du deuxième faisceau seul pour la lecture des informations de données.

**16.** Procédé selon la revendication 15, caractérisé en ce que le blocage du premier faisceau se fait en un temps de blocage qui est de l'ordre de grandeur de 1 ms.

**17.** Procédé selon la revendication 16, caractérisé en ce que le support d'enregistrement a la forme d'un disque et que le temps de blocage est inférieur au temps que met le disque pour faire un tour.

**18.** Procédé selon la revendication 1, caractérisé en ce qu'il permet l'enregistrement/lecture sur un support préformaté sur lequel les informations de préformatage ont une résolution permettant une lecture avec un faisceau de lecture à la deuxième longueur d'onde ($\lambda 2$), et qu'il comporte les étapes suivantes :

- lecture des informations de préformatage à l'aide du deuxième faisceau ;
- déblocage du premier faisceau et transmission des deux faisceaux au support d'enregistrement ;
- inscription d'informations de données sur le support d'informations par modulation des deux faisceaux à niveau de puissance élevée ou de l'un des deux faisceaux;
- blocage du premier faisceau et transmission du deuxième faisceau seul pour la lecture des informations de données.

19. Procédé selon la revendication 18, caractérisé en ce que le blocage et le déblocage du premier faisceau se font en des temps de l'ordre de grandeur de la période de modulation des informations de données enregistrées.

20. Procédé selon la revendication 18, caractérisé en ce que le support d'enregistrement a la forme d'un disque et en ce que le blocage et le déblocage du premier faisceau se font en des temps nettement inférieurs au temps que met le disque pour faire un tour.

21. Procédé selon l'une des revendications 15 ou 18, caractérisé en ce que lors de l'inscription une partie au moins de l'un ou l'autre ou des deux faisceaux est retransmise par le support d'enregistrement vers un système de suivi de piste.

22. Système optique d'inscription/lecture d'informations pour support d'enregistrement, comportant une source optique (S) émettant un faisceau à une première longueur d'onde ($\lambda 1$) et un changeur de fréquence (DF) recevant ce faisceau et transmettant à un support d'enregistrement un faisceau d'inscription comprenant un premier faisceau à cette première longueur d'onde ($\lambda 1$) et un deuxième faisceau à une deuxième longueur d'onde ($\lambda 2$) inférieure à la première longueur d'ondes, le deuxième faisceau étant utilisé seul pour la lecture.

23. Système selon la revendication 22, comprenant le support d'enregistrement, et caractérisé en ce que le support d'enregistrement (ENR) est en matériau présentant un seuil de non linéarité situé entre le maximum des sommes des énergies des deux faisceaux (EM) et un niveau d'énergie (E1) situé au voisinage du maximum d'énergie du premier faisceau.

24. Système selon la revendication 22, comprenant le support d'enregistrement, et caractérisé en ce que le support d'enregistrement (ENR) est en matériau présentant un seuil de seuil de non linéarité thermique tel que les dimensions de la marque réalisée par le faisceau d'inscription correspondent aux dimensions de la tache du deuxième faisceau.

25. Système selon la revendication 22, caractérisé en ce qu'il comporte un dispositif de filtrage (F) commandable transmettant au support d'enregistrement le premier et le deuxième faisceaux durant une phase d'écriture et ne transmettant que le deuxième faisceau durant une phase de lecture.

26. Système selon la revendication 22, caractérisé en ce que le premier et le deuxième faisceau transmis au support d'enregistrement sont colinéaires.

27. Système selon la revendication 22, caractérisé en ce que le changeur de fréquence est un doubleur de fréquence (DF).

28. Système selon la revendication 22, caractérisé en ce que le support d'enregistrement retransmet la lumière reçue vers un photodétecteur (PD) et en ce que ledit système comporte un dispositif de type dichroïque interdisant à la lumière de la première longueur d'onde d'atteindre le photodétecteur.

29. Système selon la revendication 25, caractérisé en ce que le dispositif de filtrage (F) est une cellule à cristal liquide ferroélectrique.

30. Système selon la revendication 22, caractérisé en ce qu'il comporte entre les sources lumineuses et le support d'enregistrement, un modulateur de lumière (MOD) pour moduler les faisceaux d'inscription et de lecture.

31. Système selon la revendication 30, caractérisé en ce que le modulateur (MOD) est un modulateur électrooptique.

32. Système selon la revendication 28, caractérisé en ce qu'il comporte un modulateur optique (MOD) situé entre le changeur de fréquence (DF) et le dispositif dichroïque (M2) pour moduler les faisceaux d'inscription et de lecture et pour filtrer le faisceau d'inscription lors d'une opération de lecture.

33. Système selon la revendication 28, caractérisé en ce qu'il comporte un modulateur optique (MOD) situé entre le changeur de fréquence (DF) et le dispositif dichroïque (M2) pour moduler les faisceaux d'inscription et de lecture.

34. Système selon la revendication 25, caractérisé en ce que le dispositif de filtrage (F) est un dispositif à commutation rapide dont le temps de commutation est inférieur ou de l'ordre de grandeur de la période de modulation de l'information de donnée à enregistrer ou à lire sur le support d'enregistrement.

35. Système selon la revendication 25, caractérisé en ce que le dispositif de filtrage (F) est un dispositif à commutation lente dont le temps est supérieur à la période de modulation de l'information de donnée à enregistrer ou à lire sur le support d'enregistrement.

36. Système selon la revendication 22, caractérisé en ce qu'il comporte des dispositifs de transmission dichroïques ayant au moins un meilleur coefficient de transmission à la deuxième longueur d'onde ($\lambda$2) qu'à la première longueur d'onde ($\lambda$1).

**37.** Support d'enregistrement comportant une, surface lisible optiquement, caractérisé en ce qu'il comporte des informations de préformatage lisibles optiquement à une première longueur d'onde ($\lambda$1) et des informations de données lisibles optiquement à une deuxième longueur d'onde ($\lambda$2).

**Claims**

**1.** Optical method for writing/reading information on a recording medium, whereby the information is written with the help of a write beam which comprises superimposing at least one first optical beam at a first wavelength ($\lambda_1$) and at least one second optical beam at a second wavelength ($\lambda_2$) lower than the first wavelength, characterised in that the reading is done with the help of the second beam at the second wavelength.

**2.** Method according to claim 1, characterised in that the recording medium is of a material exhibiting a thermal non-linearity recording threshold situated between the maximum of the sums of the energies of the two beams and an energy level situated substantially below the maximum energy of the first beam.

**3.** Method according to claim 1, characterised in that the recording medium (ENR) is of a non-linear material exhibiting a recording energy threshold higher than the maximum energy supplied by the first beam and lower than the sum of the energies supplied by the first and second recording beams.

**4.** Method according to claim 1, characterised in that the recording medium is of a material exhibiting a thermal non-linearity threshold such that the dimensions of the mark produced by the write beam correspond to the dimensions of the spot of the second beam.

**5.** Method according to claim 1, characterised in that the second wavelength is substantially equal to one-half of the first wavelength.

**6.** Method according to claim 1, characterised in that the beam at the second wavelength is transmitted or is reflected by the recording medium towards a photodetector in order to check each information item written by superimposing the first beam and the second beam.

**7.** Method according to claim 6, characterised in that the photodetector supplies a signal representing the intensity of the light beam received by it in order to set the power of the source.

**8.** Method according to claim 1, characterised in that the first wavelength is situated in the range of infrared wavelengths and the second wavelength is situated in the range of blue wavelengths.

**9.** Method according to claim 1, characterised in that the first beam determines an illuminated area on a recording medium and that the illuminated areas corresponding to two adjacent information items partially overlap one another.

**10.** Method according to claim 1, characterised in that during reading, the second optical beam is derived from the first optical beam and the light from this first beam that is not used to obtain the second beam has its path towards the recording medium blocked.

**11.** Method according to claim 3, characterised in that the two beams converge towards the same point on the recording medium.

**12.** Method according to claim 1, characterised in that the first beam and the second beam are co-linear.

**13.** Method according to claim 1, characterised in that the diameter of the written mark is substantially equal to one-half of the diameter of the light spot made by the first and second beams on the recording medium.

**14.** Method according to claim 1, characterised in that the two beams at the two wavelengths ($\lambda_1$, $\lambda_2$) are separately modulated and are focused in two planes of the recording medium.

**15.** Method according to claim 1, characterised in that it makes it possible to record/read on a preformatted medium on which the preformatting information is able to be read by a read beam at the first wavelength ($\lambda_1$) and that it comprises the following steps:

- reading the preformatting information with the two superimposed beams at a low power level, of the order of a few mW or less than a mW;
- switching the two superimposed beams to a high power level above the low-power level;
- writing data information onto the information medium by modulation of the two beams at high-power level or of one of the two beams;
- blocking the first beam and transmission of the second beam alone for reading the data information.

**16.** Method according to claim 15, characterised in that the blocking of the first beam is carried out in a blocking time which is of the order of magnitude of 1 ms.

17. Method according to claim 16, characterised in that the recording medium is in the form of a disk and that the blocking time is less than the time taken by the disk to perform one revolution.

18. Method according to claim 1, characterised in that it makes it possible to record/read on a preformatted medium on which the preformatting information has a resolution allowing reading with a read beam at the second wavelength ($\lambda_2$), and that it comprises the following steps:

   - reading the preformatting information with the help of the second beam;
   - unblocking the first beam and transmitting both beams to the recording medium;
   - writing data information onto the information medium by modulation of the two beams at high-power level or of one of the two beams;
   - blocking the first beam and transmitting the second beam alone for reading the data information.

19. Method according to claim 18, characterised in that the blocking and unblocking of the first beam are carried out within times having the order of magnitude of the modulation period of the recorded data information.

20. Method according to claim 18, characterised in that the recording medium is in the form of a disk and that the blocking and unblocking of the first beam are carried out within markedly shorter times than the time taken by the disk to perform one revolution.

21. Method according to either of claims 15 and 18, characterised in that the writing step involves the recording medium retransmitting at least part of one or other or both beams to a track following system.

22. Optical system for writing/reading information for a recording medium, comprising an optical source (S) which emits a first beam at a first wavelength ($\lambda_1$) and a frequency changer (DF) which receives this beam and transmits, to a recording medium, a write beam which comprises a first beam at said first wavelength ($\lambda_1$) and a second beam at a second wavelength ($\lambda_2$) lower than the first wavelength, the second beam being used solely for reading.

23. System according to claim 22, comprising the recording medium, and characterised in that the recording medium (ENR) is of a material exhibiting a non-linearity threshold situated between the maximum of the sums of the energies of the two beams (EM) and an energy level (E1) situated in the vicinity of the energy maximum of the first beam.

24. System according to claim 22, comprising the recording medium, and characterised in that the recording medium (ENR) is of a material exhibiting a thermal non-linearity threshold such that the dimensions of the mark produced by the write beam correspond to the dimensions of the spot of the second beam.

25. System according to claim 22, characterised in that it comprises a controllable filtering device (F) which transmits the first and second beams to the recording medium during a write phase and transmits only the second beam during a read phase.

26. System according to claim 22, characterised in that the first and second beams transmitted to the recording medium are co-linear.

27. System according to claim 22, characterised in that the frequency changer is a frequency doubler (DF).

28. System according to claim 22, characterised in that the recording medium retransmits the received light to a photodetector (PD) and that said system has a dichroic device which prevents the light of the first wavelength from reaching the photodetector.

29. System according to claim 25, characterised in that the filtering device (F) is a ferroelectric liquid-crystal cell.

30. System according to claim 22, characterised in that between the light sources and the recording medium it has a light modulator (MOD) for modulating the write and read beams.

31. System according to claim 29, characterised in that the modulator (MOD) is an electro-optical modulator.

32. System according to claim 28, characterised in that it has an optical modulator (MOD) situated between the frequency changer (DF) and the dichroic device (M2) for modulating the write and read beams and for filtering the write beam during a reading operation.

33. System according to claim 28, characterised in that it has an optical modulator (MOD) situated between the frequency changer (DF) and the dichroic device (M2) for moduating the write and read beams.

34. System according to claim 25, characterised in that filtering device (F) is a rapid-switching device whose switching time is less than or within the order of magnitude of the modulation period of the data information to be recorded or to be read on the recording medium.

**35.** System according to claim 25, characterised in that the filtering device (F) is a slow-switching device whose switching time is greater than the modulation period of the data information to be recorded or to be read on the recording medium.

**36.** System according to claim 22, characterised in that it includes dichroic transmission devices having at least a higher coefficient of transmission at the second wavelength ($\lambda_2$) than at the first wavelength ($\lambda_2$).

**37.** Recording medium having an optically readable surface, characterised in that it includes preformatting modifications that are optically readable at a first wavelength ($\lambda_1$) and data modifications that are optically readable at a second wavelength ($\lambda_2$).

**Patentansprüche**

**1.** Optisches Verfahren zum Schreiben und Lesen von Informationen auf einem Aufzeichnungsträger, bei dem das Schreiben von Informationen mithilfe eines Schreibstrahls erfolgt, der aus der Überlagerung mindestens eines ersten Lichtstrahls mit einer ersten Wellenlänge ($\lambda 1$) und mindestens eines zweiten Lichtstrahls mit einer zweiten Wellenlänge ($\lambda 2$) besteht, die kürzer als die erste Wellenlänge ist, dadurch gekennzeichnet, daß das Lesen mithilfe des zweiten Strahls der zweiten Wellenlänge erfolgt.

**2.** Verfahren nach Anspruch 1, dadurch gekennzeichnet, daß der Aufzeichnungsträger aus einem Material mit einer thermischen Nichtlinearitätsschwelle beim Schreiben ist, die sich zwischen dem Höchstwert der Summe der Energien der beiden Strahlen und einem Energiepegel befindet, der eindeutig unterhalb des Höchstwerts der Energie des ersten Strahls liegt.

**3.** Verfahren nach Anspruch 1, dadurch gekennzeichnet, daß der Aufzeichnungsträger (ENR) aus einem nichtlinearen Material besteht, dessen Schreibenergieschwelle oberhalb des Höchstwerts der vom ersten Strahl gelieferten Energie, aber unterhalb der Summe der Energien liegt, die von den beiden Strahlen beim Schreiben geliefert werden.

**4.** Verfahren nach Anspruch 1, dadurch gekennzeichnet, daß der Aufzeichnungsträger aus einem Material ist, das eine solche thermische Nichtlinearitätsschwelle besitzt, daß die Abmessungen der durch den Schreibstrahl erzeugten Marke den Abmessungen des Flecks des zweiten Strahls entsprechen.

**5.** Verfahren nach Anspruch 1, dadurch gekennzeichnet, daß die zweite Wellenlänge im wesentlichen den halben Wert der ersten Wellenlänge besitzt.

**6.** Verfahren nach Anspruch 1, dadurch gekennzeichnet, daß der Strahl der zweiten Wellenlänge vom Aufzeichnungsträger zum Photodetektor durchgelassen oder reflektiert wird, um jede aufgrund der Überlagerung des ersten und des zweiten Strahls geschriebene Information zu kontrollieren.

**7.** Verfahren nach Anspruch 6, dadurch gekennzeichnet, daß der Photodetektor ein Signal liefert, das der Intensität des ihm zugeführten Lichtstrahls entspricht, um die Leistung der Quelle zu regeln.

**8.** Verfahren nach Anspruch 1, dadurch gekennzeichnet, daß die erste Wellenlänge sich im Bereich der Infrarotwellenlängen und die zweite Wellenlänge sich im Bereich des blauen Lichts befindet.

**9.** Verfahren nach Anspruch 1, dadurch gekennzeichnet, daß der erste Strahl auf dem Aufzeichnungsträger eine beleuchtete Zone bestimmt und daß die beleuchteten Zonen entsprechend zwei benachbarten Informationen sich teilweise überlappen.

**10.** Verfahren nach Anspruch 1, dadurch gekennzeichnet, daß während des Lesens der zweite Lichtstrahl aus dem ersten Lichtstrahl abgeleitet wird und daß das für den Erhalt des zweiten Strahls nicht verwendete Licht des ersten Strahls in seinem Verlauf zum Aufzeichnungsträger blockiert wird.

**11.** Verfahren nach Anspruch 3, dadurch gekennzeichnet, daß die beiden Strahlen in einem gemeinsamen Punkt des Aufzeichnungsträgers konvergieren.

**12.** Verfahren nach Anspruch 1, dadurch gekennzeichnet, daß die beiden Strahlen kolinear sind.

**13.** Verfahren nach Anspruch 1, dadurch gekennzeichnet, daß der Durchmesser der geschriebenen Marke im wesentlichen gleich der Hälfte des Durchmessers des Lichtflecks ist, der von den beiden Strahlen auf dem Aufzeichnungsträger erzeugt wird.

**14.** Verfahren nach Anspruch 1, dadurch gekennzeichnet, daß die beiden Strahlen bei den beiden Wellenlängen ($\lambda$1, $\lambda$2) getrennt moduliert und in zwei Ebenen des Aufzeichnungsträgers fokussiert werden.

**15.** Verfahren nach Anspruch 1, dadurch gekennzeichnet, daß es das Schreiben und Lesen auf einem vorformatierten Aufzeichnungsträgers erlaubt, auf dem die Vorformatierungsinformationen so ausgebildet sind, daß sie durch einen Lesestrahl bei der ersten Wellenlänge ($\lambda$1) gelesen werden können, wobei das Verfahren folgende Schritte aufweist:

- Vorformatierungsinformationen werden mithilfe der beiden überlagerten Strahlen mit einem schwachen Leistungspegel in der Größenordnung von einigen Milliwatt oder unterhalb eines Milliwatts gelesen;
- die beiden überlagerten Strahlen werden auf einen höheren Leistungspegel als dem schwachen Leistungspegel umgeschaltet;
- Dateninformationen werden durch Modulation dieser beiden Strahlen oder eines dieser beiden Strahlen bei hohem Leistungspegel auf dem Aufzeichnungsträger geschrieben;
- der erste Strahl wird blockiert und der zweite Strahl wird alleine zum Lesen der Dateninformationen übertragen.

**16.** Verfahren nach Anspruch 15, dadurch gekennzeichnet, daß die Blockierung des ersten Strahls in einer Blokkierzeit erfolgt, die in der Größenordnung von 1 ms liegt.

**17.** Verfahren nach Anspruch 16, dadurch gekennzeichnet, daß der Aufzeichnungsträger die Form einer Scheibe hat und daß die Blockierzeit geringer ist als die Zeit, die die Scheibe für einen Umlauf braucht.

**18.** Verfahren nach Anspruch 1, dadurch gekennzeichnet, daß es das Schreiben und Lesen auf einem vorformatierten Aufzeichnungsträger erlaubt, auf dem die Vorformatierungsinformationen eine solche Auflösung besitzen, daß ein Lesen mit einem Lesestrahl bei der zweiten Wellenlänge ($\lambda$2) möglich ist, wobei das Verfahren die folgenden Schritte aufweist:

- die Vorformatierungsinformationen werden mit dem zweiten Strahl gelesen;
- der erste Strahl wird freigegeben und die beiden Strahlen werden auf den Aufzeichnungeträger übertragen;
- Dateninformationen werden auf dem Aufzeichnungsträger durch Modulation der beiden Strahlen oder eines dieser beiden Strahlen bei großer Leistung aufgezeichnet;
- der erste Strahl wird blockiert und nur der zweite Strahl wird zum Lesen der Dateninformationen übertragen.

**19.** Verfahren nach Anspruch 18, dadurch gekennzeichnet, daß die Blockierung und Freigabe des ersten Strahls in einer Zeit erfolgen, die in der Größenordnung der Modulationsperiode der aufgezeichneten Dateninformationen liegt.

**20.** Verfahren nach Anspruch 18, dadurch gekennzeichnet, daß der Aufzeichnungsträger die Form einer Scheibe hat und daß die Blockierung und Freigabe des ersten Strahls in einer Zeit erfolgen, die deutlich unter der Zeit für einen Umlauf der Scheibe liegt.

**21.** Verfahren nach einem der Ansprüche 15 und 18, dadurch gekennzeichnet, daß beim Schreiben mindestens ein Teil des einen oder anderen Strahls oder beider Strahlen vom Aufzeichnungsträger zu einem Spurverfolgungssystem weiterübertragen wird.

**22.** Optisches System zum Schreiben und Lesen auf einem Aufzeichnungsträger, mit einer Lichtquelle (S), die einen Strahl einer ersten Wellenlänge ($\lambda$1) emittiert, und mit einem Frequenzwandler, der diesen Strahl empfängt und an einen Aufzeichnungsträger einen Schreibstrahl überträgt, der einen ersten Strahl bei dieser ersten Wellenlänge ($\lambda$1) und einen zweiten Strahl bei einer zweiten Wellenlänge ($\lambda$2) enthält, welche kürzer als die erste Wellenlänge ist, wobei nur der zweite Strahl zum Lesen verwendet wird.

**23.** System nach Anspruch 22 mit dem Aufzeichnungsträger und dadurch gekennzeichnet, daß der Aufzeichnungsträger (ENR) aus einem Material ist, das eine Nichtlinearitätsschwelle zwischen dem Höchstwert (EM) der Summe der Energien der beiden Strahlen und einem Energiepegel (E1) besitzt, der sich in der Nähe des Höchstwerts der Energie des ersten Strahls befindet.

**24.** System nach Anspruch 22, mit dem Aufzeichnungsträger und dadurch gekennzeichnet, daß der Aufzeichnungsträger (ENR) aus einem Material mit einer solchen thermischen Nichtlinearitätsschwelle besteht, daß die Abmessungen der Marken, die vom Schreibstrahl realisiert werden, den Abmessungen des Flecks des zweiten Strahls entsprechen.

**25.** System nach Anspruch 22, dadurch gekennzeichnet, daß es eine steuerbare Filtervorrichtung (F) enthält, die den ersten und den zweiten Strahl während einer Schreibphase und nur den zweiten Strahl während einer Lesephase an den Aufzeichnungsträger überträgt.

26. System nach Anspruch 22, dadurch gekennzeichnet, daß der erste und der zweite Strahl, die an den Aufzeichnungsträger übertragen werden, kolinear sind.

27. System nach Anspruch 22, dadurch gekennzeichnet, daß der Frequenzwandler ein Frequenzverdoppler (DF) ist.

28. System nach Anspruch 22, dadurch gekennzeichnet, daß der Aufzeichnungsträger das empfangene Licht an einen Photodetektor (PD) überträgt und daß das System eine dichroitische Vorrichtung enthält, die das Licht mit der ersten Wellenlänge daran hindert, den Photodetektor zu erreichen.

29. System nach Anspruch 25, dadurch gekennzeichnet, daß die Filtervorrichtung (F) eine ferroelektrische Flüssigkristallzelle ist.

30. System nach Anspruch 22, dadurch gekennzeichnet, daß es zwischen den Lichtquellen und dem Aufzeichnungsträger einen Lichtmodulator (MOD) zur Modulation der Schreib- und Lesestrahlen enthält.

31. System nach Anspruch 30, dadurch gekennzeichnet, daß der Modulator (MOD) ein elektrooptischer Modulator ist.

32. System nach Anspruch 28, dadurch gekennzeichnet, daß es einen optischen Modulator (MOD) enthält, der zwischen dem Frequenzwandler (DF) und der dichroitischen Vorrichtung (M2) liegt, um die Schreib- und Lesestrahlen zu modulieren und den Schreibstrahl während des Lesens auszufiltern.

33. System nach Anspruch 28, dadurch gekennzeichnet, daß es einen optischen Modulator (MOD) zwischen dem Frequenzwandler und der dichroitischen Vorrichtung (M2) zur Modulation der Schreib- und Lesestrahlen enthält.

34. System nach Anspruch 25, dadurch gekennzeichnet, daß die Filtervorrichtung (F) eine schnelle Umschaltvorrichtung ist, deren Schaltzeit geringer als die oder in der Größenordnung der Modulationsperiode der auf dem Aufzeichnungsträger zu schreibenden oder zu lesenden Dateninformation ist.

35. System nach Anspruch 25, dadurch gekennzeichnet, daß die Filtervorrichtung (F) eine langsame Schaltvorrichtung ist, deren Schaltzeit größer als die Modulationsperiode der auf dem Aufzeichnungsträger zu schreibenden oder zu lesenden Dateninformation ist.

36. System nach Anspruch 22, dadurch gekennzeichnet, daß es dichroitische Übertragungsvorrichtungen aufweist, die mindestens einen höheren Durchlaßkoeffizienten für die zweite Wellenlänge (λ2) als für die erste Wellenlänge (λ1) besitzen.

37. Aufzeichnungsträger, der eine optisch lesbare Oberfläche besitzt, dadurch gekennzeichnet, daß er bei einer ersten Wellenlänge (λ1) optisch lesbare Vorformatierungsinformationen und bei einer zweiten Wellenlänge (λ2) optisch lesbare Dateninformationen enthält.

FIG.1

$$\varnothing/2 = \frac{\lambda}{4 \sin u}$$

FIG.2a

FIG.2b

17

PD

S    DF    λ ; λ/2    F    M 1

M2    λ/2

L    ENR

## FIG.3

M3    NL    M4

SC    λ ; λ/2

Laser
SC monomode    Cristal NL
LiNb O₃

## FIG.4

Laser
SC monomode

Guide NL
LiNbO$_3$ /LiTaO$_3$

$\lambda$ ; $\lambda$/2

## FIG.5a

$\lambda$  $\lambda$/2

Renversement
périodique de domaines
ferroélectriques

## FIG.5b

Polariseur

0

−

P1

+

0

P1

FIG.6a

FIG.6b

Polariseur

$\lambda$

$\lambda/2$

$\lambda$

$\lambda/2$

$-V_0$

FIG.7a

$\lambda$

$\lambda/2$

$\lambda/2$

$+V_0$

FIG.7b

FIG.8

FIG.9

FIG.10

## FIG.11

## FIG.12

$\lambda 1 = \lambda$

$\lambda 2 = \lambda / 2$

## FIG.13a

$\lambda 2 = \lambda / 2$

EM

seuil

E1

d'enregistrement

Em

$\lambda 1 = \lambda$

## FIG.13b

PREFOR    ENR    INF    PREFOR

## FIG.14

SIL    ENR    PREFOR    INF 1    INF 2

## FIG.15a

SIL 1

SIL 2    PREFOR    INF 1    INF 2

ENR    INF 1    INF 2

## FIG.15b